Europäisches Patentamt

(19) **European Patent Office**

Office européen des brevets

(11) Publication number: **0 125 739**
**B1**

(12) **EUROPEAN PATENT SPECIFICATION**

(45) Date of publication of patent specification: **26.08.87**

(21) Application number: **84200709.8**

(22) Date of filing: **16.05.84**

(51) Int. Cl.⁴: **C 08 L 69/00,** C 08 L 67/00 //
(C08L69/00, 23:16,
75:04),(C08L67/00, 23:16,
75:04)

(54) Impact-resistant thermoplastic moulding compound.

(30) Priority: **17.05.83 NL 8301738**

(43) Date of publication of application:
**21.11.84 Bulletin 84/47**

(45) Publication of the grant of the patent:
**26.08.87 Bulletin 87/35**

(84) Designated Contracting States:
**AT BE DE FR GB IT NL SE**

(56) References cited:
**NL-A- 295 172**
**NL-A-7 605 494**
**NL-A-7 804 745**

(73) Proprietor: **STAMICARBON B.V.**
**Mijnweg 1**
**NL-6167 AC Geleen (NL)**

(72) Inventor: **Van Asperen, Pieter Jan**
**Boerhaavestraat 21**
**NL-6164 GP Geleen (NL)**
Inventor: **Schoen, Löwhardt Adolf Albert**
**Constantijn Hugostraat 2**
**NL-6176 BT Spaubeek (NL)**

(74) Representative: **Hoogstraten, Willem Cornelis**
**Roeland et al**
**OCTROOIBUREAU DSM Postbus 9**
**NL-6160 MA Geleen (NL)**

The file contains technical information
submitted after the application was filed and
not included in this specification

## Description

The invention relates to an impact-resistant thermoplastic moulding component.

It is known that polyester and polycarbonate are suitable plastics for the manufacture of all kinds of articles. In addition, it is known to mix these plastics with other plastics in order to improve certain specific properties of these plastics.

From NL 7300479 it is for example known to prepare a polymer composition consisting of a preponderant quantity of polycarbonate (more than 90%), a small amount of graft copolymer (less than 2%) and a modifier such as polyethylene or a polyurethane elastomer.

From various publications it is known that mixtures of polycarbonate (PC) with a graft copolymer of styrene and acrylonitrile on a rubber (ABS) have favourable properties. Examples of such publications are DE—PS 1,170,141 and 1,810,993, NL 7316731 and 7316733 or EP—A—146,5,202 and 51,336.

EP—A—64,689 describes a mixture of a polyalkylene terephthalate and a polycarbonate.

In NL 7605494 the use of modified ethylene-propylene-diene polymers is described for improving the impact resistance of a polyester or a polycarbonate.

In NL 295172 the use of ethylene-propylene copolymers or poly-urethane elastomers is described for improving the impact resistance of polycarbonate.

In the case of polycarbonate the problem arises that the impact resistance of a notched specimen strongly depends on the radius of curvature at the apex of the notch. A normal notch according to ISO R 180 (Izod), for example, gives a good impact resistance, but when a notch of very small radius is applied, the material shows a brittle fracture.

In the case of polyester, the impact resistance as such is relatively low already.

The object of the invention is to provide a moulding compound not having these disadvantages.

The present invention is based on the surprising insight that polyester and polycarbonate can very readily be made impact resistant with a mixture of a thermoplastic polyurethane and an ethylene propylene diene rubber which has been treated with an ethylenic unsaturated compound which contains one or more carboxyl groups or can supply them.

According to the invention, the thermoplastic moulding compound of the invention comprises:

A. 50—95 parts by weight of polycarbonate or polyester;

B. 2.5—15 parts by weight of thermoplastic polyurethane and

C. 2.5—35 parts by weight of ethylene-propylene-diene rubber that has been treated with an ethylenic unsaturated carboxylic acid or its anhydride or semi-ester.

Surprisingly, it has been found that such moulding compounds have a very good notched impact resistance, even if the notch has a very small radius of curvature at its apex.

More in particular, the moulding compound contains 65—80 parts by weight of polyester or polycarbonate, 2.5—10 parts by weight of thermoplastic polyurethane and 15—25 parts by weight of ethylene-propylene-diene rubber treated with an ethylenic unsaturated carboxylic acid or its anhydride or semi-ester, the sum of all parts by weight being 100.

In principle, all thermoplastic polycarbonates are suitable for the compounds of the invention. Polycarbonates are known as such and can be obtained by conversion of dihydroxy or polyhydroxy compounds with phosgene or diesters or carbonic acid.

Particularly, suitable dihydroxy compounds are dihydroxydiaryl alkanes, including those compounds containing alkyl groups or chlorine or bromine atoms in the ortho-position relative to the hydroxyl group.

The following compounds are preferred dihydroxydiaryl alkanes: 4,4'-dihydroxy-2,2-diphenylpropane (bisphenol A), tetramethyl bisphenol A, tetrachlorobisphenol A, tetrabromobisphenol A and bis(4-hydroxyphenyl)-para-diisopropylbenzene. Besides the polycarbonates which can be prepared from dihydroxydiaryl alkanes alone, branched polycarbonates can be used. For the preparation of polycarbonates of this type, a portion of the dihydroxy compound, for example 0.2—2 mole %, is replaced by a polyhydroxy compound.

Polycarbonates of the above-mentioned type are described in, for example, the US 3,028,365; 2,999,835; 3,148,172; 3,271,368; 2,970,137; 2,991,273 and 3,271,367.

In the case that the polymer composition is required to have flame-inhibiting properties, the polycarbonate component can advantageously consist wholly or partly of halogenated polycarbonate.

Polycarbonate can be prepared in a manner known as such, for example as described in the above-mentioned patents.

As polyesters, in principle all polyesters that can be used as thermoplastic are suitable. Preference is given to polyalkene terephthalate, more in particular polyethylene terephthalate and polybutene terephthalate.

These polyalkene terephthalates are products of the reaction of aromatic dicarboxylic acids or reactive derivatives thereof (for example dimethyl esters or anhydrides) and aliphatic, cycloaliphatic or araliphatic diols and mixtures thereof).

By preference, the polyalkylene terephthalate used according to the invention is prepared in a manner known as such (Kunststoff Handbuch, Vol. VIII, p.695 ff., Carl Hansen Verlag, München 1973) from terephthalic acid or reactive derivatives thereof and aliphatic or cycloaliphatic diols.

The polyalkylene terephthalates preferably used contain at least 80, more in particular at least 90 moles per cent (referred to the dicarboxylic acid component) of terephthalic acid radicals, and preferably at least 80, more in particular at least 90 moles per cent (referred to the diol component) of ethylene glycol and/or 1,4-butanediol radicals.

These polyalkene terephthalates may to a maximum of 20 mole per cent contain other aromatic dicarboxylic acids with 8—14 carbon atoms, or aliphatic dicarboxylic acids with 4—12 carbon atoms. Examples of such dicarboxylic acids are phthalic acid, isophthalic acid, naphthene-2,6-dicarboxylic acid, 4,4'-diphenylcarboxylic acid, succinic acid, adipic acid, sebacic acid, azelaic acid and cyclohexane diacetic acid.

Besides the diol radicals already mentioned, the polyalkene terephthalate may to a maximum of 20 moles per cent contain radicals of other aliphatic diols with 3—12 C-atoms or cycloaliphatic diols with 6—21 C-atoms, such as radicals of 1,3-propanediol, 2-ethyl-1,3-propanediol, neopentyl glycol, 1,5-pentanediol, 1,6-hexanediol, 1,4-cyclohexane-dimethanol, 3-methyl-2,4-pentanediol, 2-methyl-2,4-pentanediol. 2,2-diethyl-1,3-propanediol, 2,5-hexanediol, 1,4-di(β-hydroxyethoxy)benzene, 2,2-bis-(4-hydroxycyclohexyl)-propane, 2,4-dihydroxy-1,1,3,3,-tetramethylcyclobutane, 2,2-bis-(3-β-hydroxyethoxyphenyl)propane and 2,2-bis-(4-hydroxypropoxyphenyl)propane.

The polyalkene terephthalates can be branched by incorporation of relatively small amounts of tri- or tetrafunctional alkanoles or tri- or tetrafunctional carboxylic acids. Examples of such compounds are tri-mesitinic acid, 1,2,4-benzenetricarboxylic acid, trimethylolethane, tri-methylolpropane and pentaerythritol. In general, no more than about 1 mole % of such compounds will be used.

Preferably, the polyalkene terephthalates used have an intrinsic viscosity of 0.4—1.5 dl/g, more in particular of 0.6—1,2 dl/g, measured at 25°C in a 1:1 (wt) mixture of phenol and ortho-dichlorobenzene.

As polyurethane known thermoplastic can be used. These polyurethanes can be prepared by reaction of a diisocyanate and one or more dihydroxy compounds.

Eligible dihydroxy compounds are the polyoxyalkene glycols composed of $C_{2-4}$ oxyalkene units, such as polyethylene glycol, polypropylene glycol and poly-tetramethylene glycol, polylactone diols derived from a lactone containing 5—12 C-atoms, for example hydroxyl-terminal polycaprolactone, polyenantholactone, polyvalerolactone or copolylactones and hydroxyl-terminal polyesters.

In some modes of realization, besides the above-mentioned diol also a low-molecular diol is used which may function as chain extender. Dihydroxy compounds with a molecular weight of between 60 and 200 can be used. Examples are aliphatic unbranched diols such as ethylene glycol, 1,4-butanediol, and 1,6-hexanediol, branched diols such as 1,2-propylene glycol and 2,2-dimethyl-1,4-butanediol, low-molecular polyalkene glycols such as diethylene glycol, triethylene glycol, or cycloaliphatic diols such as 1,4-(hydroxymethyl)cyclohexane.

As diisocyanates, the usual aromatic, aliphatic, cycloaliphatic or araliphatic compounds are used, in pure or crude form, such as toluene diisocyanates, 4,4'-diisocyanate diphenyl methane, polyarylene polyphenyl isocyanates, isophorone diisocyanate and hexa-methylene diisocyanate. Such an amount of diisocyanate is used that the total NCO/OH ratio is about 1:1, for example 1.00:1 to 1.05:1.

In general, also one or more catalysts are used which accelerate the isocyanate reactions. The most common types are the polyamino compounds, for example triethylenediamine, and tin-containing compounds, for example dibutyl tin diacetate or dibutyl tin dilaurate.

The polyurethane component of the polymer composition is preferably prepared on the basis of one or more hydroxyl-terminal polyesters. These polyesters may in turn have been prepared either by condensation of approximately equivalent amounts of a glycol and a dicarboxylic acid (or an anhydride thereof) or by reaction of a lactone having at least 6 carbon atoms in the lactone ring and a small amount of bifunctional initiator, such as a glycol, an aminoalcohol or a diamine. In any case, preferably a polyester with a relatively high molecular weight is used, that is, with a molecular weight of at least 1000.

In the condensation of a glycol and a dicarboxylic acid, the glycol preferably contains 2—6 carbon atoms. Suitable glycols are ethylene, trimethylene, tetramethylene, hexene and propene glycols. The dicarboxylic acid is preferably aliphatic and contains 2—8 carbon atoms, preferably cinnamic acid, glutaric acid, adipic acid and the like. This condensation polymerization of these polyesters is conducted in a known manner.

When the polyester is prepared on the basis of a lactone, preferably caprolactone is used. The polymerization can then be carried out in a simple manner by mixing the lactone into the bifunctional initiator, at elevated temperature, for example between 120 and 200°C. Preferably, a catalyst is used in a concentration of 1/1000 to 1/2 per cent by weight. Various known catalysts can be used. More detailed information on the preparation of polyesters on the basis of lactones can be found in US 2,933,477 and 2,933,478.

The above-described linear dihydroxy polyesters can be reacted with an excess of, preferably aromatic, diisocyanate, for example 4,4'-diphenylmethane diisocyanate (MDI) or toluene diisocyanate (TDI). In this reaction, which is preferably conducted at a temperature of between 80 and 120°C, a prepolymer is obtained which consists of a mixture of the excess amount of unreacted diisocyanate and a diisocyanate-terminal polymer-diol. This mixture can then be reacted with a chain extender in such ratios that all free isocyanate groups take part in the reaction. The chain extender can be a glycol having a low molecular weight, such as ethylene glycol, 1,4-butanediol and 1,6-hexamethylene glycol.

A highly suitable polyurethane according to the invention can be prepared from 1 molar equivalent of a

3

dihydroxy polyester, 6 molar equivalents of diisocyanate and 5 molar equivalents of chain extender. In general, it is preferred to use 2—6 gram molecules of diisocyanate per gram molecule of dihydroxy polyester.

The polyurethane used may be crosslinked. This can easily be achieved by using a small excess of diisocyanate or by using a trivalent or higher-valent compound.

The third component of the moulding compound according to the invention is an ethylene-propylene-diene rubber containing carboxyl groups.

As diene, the rubber preferably contains non-conjugated dienes with 6—12 carbon atoms. The amount of diene may vary from 0.01 to 5 mole per cent, but is preferably between 0.5 and 3.5 mole per cent. The dienes which are most preferred have a structure such that only one double bond is incorporated in the polymer and the other is freely available for possible reaction with the unsaturated carboxylic acid. Double bonds that are readily incorporated are terminal double bonds without steric hindrance or double bonds in a strained ring system such as, for example, in a norbornene ring. The double bond which is not incorporated can originate from a non-strained ring system (e.g. dicyclopentadiene), from an alkylidene group (e.g. ethylidene norbornene) or, and preferably, from an alkenyl group, and is in the latter case not located in or directly to a ring system. Examples of such compounds are 2-propenyl norbornene, 2-butenyl norbornene, 1,5-heptadiene and 1,4-hexadiene.

The best results are obtained when the number-average molecular weight of the rubbery copolymer is between 50,000 and 200,000.

The unsaturated carboxylic acid is preferably polybasic and is used as acid, anhydride or semi-ester. As examples, mention can be made of maleic acid, fumaric acid, itaconic acid, maleic anhydride, monoethyl ester of fumaric acid, monomethyl ester of maleic acid and bicyclo (2,2,1) hept-5-ene-2,3-dicarboxylic acid anhydride. Besides the unsaturated carboxylic acid with which the rubber or the mixture is converted, also other monomers may be present in minor amounts. These amounts will preferably stay below 25 per cent by weight, in particular below 10 per cent by weight, relative to the ethylene-propylene-diene rubber. If a polybasic, unsaturated carboxylic acid is chosen, preferably only a minor amount of a simple, unsaturated carboxylic acid or other vinyl monomer is present. This amount is at most 25 per cent by weight, in particular 10 per cent by weight. The minimal amount is preferably 0.4 wt.%. Most preferable is the use of the unsaturated carboxylic acid without other unsaturated monomers being present.

For the reaction of the rubbery copolymer with the unsaturated carboxylic acid, the usual processes can be applied. These are carried out in suspension, in solution or in bulk. The reaction can further be conducted by addition of a radical donor such as a peroxide or a hydroperoxide or by radiation.

However, most preference is given to thermal reaction in bulk, which may take place under dynamic as well as under static conditions. In the case of operation on a small scale, static conditions are preferred when powdered raw materials are started from. These can simply be mixed in any ratio at room temperature, and subsequently be brought into a sealable reaction chamber for the reaction. In the case of preparation on a large scale, dynamic conditions are preferred.

In view of the viscosity of the polymeric raw materials, dynamic mixing of the carboxylic acid and/or derivatives with the rubbery copolymer requires high temperatures, resulting in high pressures. These conditions can be attained in an extruder or in an internal mixer.

In the thermal conversion in bulk, the polymeric raw materials have a strong tendency towards both cross-linking and degradation. By an appropriate choice of polymeric raw materials and adjustments of the reaction conditions, the molecular changes of the polymeric raw materials can remain within the desired limits, the degree of conversion still being sufficiently high. For better processability, for example, it may be advantageous to allow some degradation. This is achieved by applying a higher reaction temperature. The reaction preferably takes place under inert conditions, i.e. in the absence of oxygen.

Unsaturation in the polymeric raw materials is not necessary for reaction with the unsaturated carboxylic acid thereof. The reaction may be promoted by it, though, resulting in higher efficiencies. Also the reaction temperature is important; it should preferably be between 180°C and 400°C, in particular between 250 and 350°C. As the temperature is higher, a shorter reaction time suffices. The reaction times are generally between 0.5 and 60 minutes. If it is desired to obtain optimum values for the toughness at low temperatures, the reaction is conducted between 250 and 300°C for 2—60 minutes.

After the reaction, depending on the structure in which the carboxylic acid has been used an acid, anhydride or semi-ester can be obtained, bound to the polymer. In the reaction, preferably the anhydride form is chosen. However, since the acid form yields the best results as to properties, the anhydride form is preferably converted to the acid form, for example by hydrolysis with hot, acidified water.

The mouldings compound according to the invention can be obtained in a manner known as such, by mixing of the various components, for example by mixing the components at a temperature of between 150 and 300°C in a batch kneader or in a continuous mixing and kneading machine, such as a single or twinscrew extruder. The polymer composition can in addition contain various additives, such as pigments, fillers, stabilizers, antioxidants, flattening agents, antistatic agents, flame inhibitors, other plastics and the like.

The invention is explained with the following examples.

**0 125 739**

Examples and Comparative Examples

On the basis of a polycarbonate (Lexan® 141, registered trademark from General Electric Cy.), a polybutene terephthalate (Arnite® T 06-200 registered trademark from AKZO), thermoplastic polyurethane (Estane® 5702 F1 and 58137 registered trademark from Goodrich) and a product of the reaction of maleic anhydride with an ethylene-propylene-diene rubber (Keltan® 312, registered trademark from DSM, 1.3 wt.% MA) a number of mixtures were prepared at 230°C. Of these mixtures test bars were made for determination of the notched impact resistance. The notched impact resistance of the mixtures on the basis of the polybutene terephthalate was determined according to ISO R 180 (Izod) determined at 23°C. For the mixtures on the basis of polycarbonate, the same method was used but the radius of curvature at the apex of the notch had been made smaller by a factor 10.

The compositions (in parts by weight) of the mixtures and the notched impact resistance values are represented in table I.

TABLE I

| | 1* | 2* | 3 | 4* | 5* | 6 |
|---|---|---|---|---|---|---|
| polycarbonate | 100 | 80 | 70 | — | — | — |
| polybuteneterephthalate | — | — | — | 100 | 80 | 70 |
| polyurethane Est. 5702 F1 | — | — | — | — | — | 10 |
| polyurethane Est. 58137 | — | — | 10 | — | — | — |
| MA-EPDM | — | 20 | 20 | — | 20 | 20 |
| notched impact resistance (kJ/m$^2$) | 1.9 | 21.6 | 47.6 | 3.2 | 4.0 | 20.5 |

* not according to the invention.

The results very clearly show that the mixtures according to the invention have excellent properties

Using a commercially available polycarbonate (LEXAN® 121), a commercially available polyurethane (Estane® 58137), and a EPDM rubber modified with maleic anhydride (Keltan® 320, 1,2 wt.% MA), three blends were prepared. In the same way as above, the impact resistance was determined, however at this time at −20°C. The composition of the blends and the results obtained are given in table II.

TABLE II

| | 7* | 8* | 9 |
|---|---|---|---|
| polycarbonate (wt. parts) | 100 | 80 | 70 |
| polyurethane (wt. parts) | — | — | 10 |
| MA-EPDM (wt. parts) | — | 20 | 20 |
| impact resistance (kJ/m$^2$) | 1.9 | 4.0 | 43.6 |

* not according to the invention

**Claims**

1. Thermoplastic moulding compound, comprising
A. 50—95 parts by weight of polycarbonate or polyester;
B. 2.5—15 parts by weight of thermoplastic polyurethane, and
C. 2.5—35 parts by weight of ethylene-propylene-diene rubber treated with an ethylenic unsaturated carboxylic acid or its anhydride or semi-ester.

2. Moulding compound according to claim 1, characterized in that a polyurethane on the basis of a polyester polyol is used.

3. Moulding compound according to claim 1, characterized in that as component C a reaction product between ethylene-propylene-diene rubber and maleic anhydride is used.

5

4. Moulding compound according to claim 1, characterized in that the moulding compound comprises
A. 65—80 parts by weight of polycarbonate or polyester
B. 2.5—10 parts by weight of thermoplastic polyurethane, and
C. 15—25 parts by weight of ethylene-propylene-diene rubber treated with an ethylenic unsaturated carboxylic acid or its anhydride or semi-ester.

5. Use of a mixture of a thermoplastic polyurethane and an ethylene-propylene-diene rubber modified with carboxyl groups for rendering polycarbonate or polyester impact-resistant.

**Patentansprüche**

1. Thermoplastische Formmasse, dadurch gekennzeichnet, daß sie aus
A. 50—95 Gew.-Teilen Polycarbonat oder Polyester
B. 2,5—15 Gew.-Teilen thermoplastischem Polyurethan und
C. 2,5—35 Gew.-Teilen Ethylen-Propylen-Dienkautschuk, der mit einer ethylenisch ungesättigten Carbonsäure oder deren Anhydrid oder Halbester behandelt worden ist, besteht.

2. Formmasse nach Anspruch 1, dadurch gekennzeichnet, daß ein Polyurethan auf der Basis eines Polyesterpolyols verwendet wird.

3. Formmasse nach Anspruch 1, dadurch gekennzeichnet, daß als Komponente C ein Reaktionsprodukt zwischen Ethylen-Propylen-Dien kautschuk und Maleinsäureanhydrid verwendet wird.

4. Formmasse nach Anspruch 1, dadurch gekennzeichnet, daß die Masse aus
A. 65—80 Gew.-Teilen Polycarbonat oder Polyester
B. 2,5—10 Gew.-Teilen thermoplastischem Polyurethan und
C. 15—25 Gew.-Teilen Ethylen-Propylen-Dienkautschuk, der mit einer ethylenisch ungesättigten Carbonsäure oder deren Anhydrid oder Halbester behandelt worden ist, besteht.

5. Verwendung eines Gemisches eines Polyurethans und eines mit Carboxylgruppen modifizierten Ethylen-Propylen-Dienkautschuks, um Polycarbonat oder Polyester kerbschlagfest zu machen.

**Revendications**

1. Composé de moulage thermoplastique, comprenant:
A. 50 à 95 parties en poids d'un polycarbonate ou polyester,
B. 2,5 à 15 parties en poids d'un polyuréthane thermoplastique, et
C. 2,5 à 35 parties en poids d'un caoutchouc éthylène/propylène/diène traité par un acide carboxylique à insaturation éthylénique ou son anhydride ou semi-ester.

2. Composé de moulage selon la revendication 1, caractérisé en ce qu'on utilise un polyuréthane à base d'un polyester-polyol.

3. Composé de moulage selon la revendication 1, caractérisé en ce qu'on utilise à titre de composant C un produit de réaction du caoutchouc éthylène/propylène/diène avec l'anhydride maléique.

4. Composé de moulage selon la revendication 1, caractérisé en ce que le composé de moulage comprend:
A. 65 à 80 parties en poids d'un polycarbonate ou polyester,
B. 2,5 à 10 parties en poids d'un polyuréthane thermoplastique, et
C. 15 à 25 parties en poids d'un caoutchouc éthylène/propylène/diène traité par un acide carboxylique à insaturation éthylénique ou son anhydride ou semi-ester.

5. Utilisation d'un mélange d'un polyuréthane thermoplastique et d'un caoutchouc éthylène/propylène/diène modifié par des groupes carboxyle pour conférer de la résistance au choc au polycarbonate ou polyester.

6